# EUROPÄISCHE PATENTANMELDUNG

(11) **EP 1 337 098 A2**
(43) Veröffentlichungstag der Anmeldung: **20.08.2003**
(21) Anmeldenummer: 03003423.5
(22) Anmeldetag: 14.02.2003
(51) Int. Cl.: H04M 3/51, H04M 3/42, H04Q 3/66

(54) **Telekommunikationsanlage mit einer Mehrzahl von Endgeräten**

(30) Priorität: 14.02.2002 DE 10207546
(71) Anmelder: Tenovis GmbH & Co. KG, 60326 Frankfurt (DE)
(72) Erfinder: Rodewald, Frank, Dipl.-Ing., 50181 Bedburg (DE); Kayser, Udo, Dipl.-Ing., 42285 Wuppertal (DE)
(74) Vertreter: Heinze, Ekkehard, Dipl.-Phys. Dr.

(57) **Zusammenfassung**

Telekommunikationsanlage mit.einer Mehrzahl von Endgeräten, denen jeweils eine maximal n-stellige interne Rufnummer zugeordnet ist, und einem Rufnummernpeicher mit 10ⁿ Speicherplätzen, wobei einen dem Rufnummernspeicher vorgeschalteten programmierbaren Zuordnungstabellen-Speicher zur Speicherung einer Zuordnungstabelle, die jedem Endgeräteanschluss eine unabhängig von der internen Rufnummer wählbare, aus maximal m Ziffern bestehende Adresse zuweist.

## Beschreibung

Die Erfindung betrifft eine Telekommunikationsanlage sowie ein Verfahren zum Betrieb einer solchen.

Trotz der zunehmenden Verbreitung von E-Mail-Programmen in Unternehmen wie auch staatlichen, sozialen und wissenschaftlichen Einrichtungen usw. und der stark zunehmenden Bedeutung der elektronischen Post im Innen- wie Außenverkehr stellen Telekommunikationsanlagen nach wie vor das dominierende Kommunikationsmittel im wirtschaftlichen und gesellschaftlichen Leben dar. Aus Gründen der Vereinfachung der Kommunikationsabläufe sowie der Kostenreduzierung streben die genannten Betreiber von privaten TK-Anlagen (PABX) den Aufbau von zentralen TK-Anlagen an, an die möglichst alle Mitarbeiter angeschlossen sind und die eine Reihe von Dienstmerkmalen besitzen, mit denen durchgängig eine wesentliche Erleichterung der Arbeitsabläufe möglich ist. Hierzu zählen insbesondere verschiedene Rufweiterleitungs- und Konferenzmodi. Vorhandene Anlagen werden nach Möglichkeit entsprechend aufgerüstet, solange das Anschlusspotential für die Größe des Unternehmens oder der Einrichtung ausreichend ist.

Betrachtet man eine TK-Anlage ohne Vernetzung, so hat diese einen Rufnummernhaushalt, der durch die maximale Stellenanzahl n für interne Rufnummern begrenzt ist (z.B. n = 4). Theoretisch ergibt sich daraus die Möglichkeit, maximal 10⁴ (z.B. 10⁵ = 100 00) interne Endgeräte eindeutig zu identifizieren. Die meisten Leistungsmerkmale und die Speicherstruktur der TK-Anlage basieren auf diesen internen Rufnummern. In der Regel existiert zu jedem Endgerät ein Speicherplatz, der dieses Endgerät beschreibt und über die Endgerätenummer indiziert ist.

In der Regel sind jedoch bestimmte Rufnummernblöcke durch spezielle Funktionen belegt, wie z.B. die 0 für die Belegung einer Amtsleitung, oder die 9 zur Belegung einer privaten Netzleitung, so dass der für interne Endgeräte nutzbare Rufnummernbereich sich verringert: Ist die 9 als Netzleitungs-Kennziffer eingerichtet, sind die internen Rufnummern 9x, 9xx, 9xxx, 9xxxx nicht mehr verfügbar.

Vergibt man für bestimmte Teilnehmer zweistellige Rufnummern, so ist der komplette dahinterliegende Rufnummernblock nicht mehr für andere interne Endgeräte zu verwenden (gleiches gilt für 1-/3-/4-stellige Rufnummern). Ist also etwa eine Tln 21 eingerichtet, sind die Nummern 21x, 21xx, 21xxx nicht mehr verfügbar. Ein weiteres Beispiel: Alle Internrufnummern beginnend mit 32 sind dreistellig. In diesem Bereich sind dadurch Rufnummern mit der Struktur 320 bis 329 möglich, nicht aber 3200 bis 3209, 3210 bis 3219 etc.

Rufnummern, deren Ziffernzahl größer als die maximale Stellenzahl ist, sind nicht möglich, es sei denn man erhöht die maximale Stellenzahl des Systems, was mit jeder neuen Stelle den damit verbundenen Speicherbereich verzehnfacht. Das ist insbesondere bei Systemen unsinnig, deren sonstige Ressourcen (CPU, Koppelfeld...) hier nicht Schritt halten können, so dass die Anzahl anschaltbarer Endgeräte trotz vergrößertem Adressierungsbereich gleich bleibt.

Außerdem ist es nicht möglich, innerhalb einer TK-Anlage die gleiche Rufnummer im Rufnummernplan zweifach zu vergeben. Dies ist insbesondere dann von Interesse, wenn eine TK-Anlage von mehreren Firmen genutzt wird. Je kleiner die Firmen sind, um so kürzer werden die internen Rufnummer gewählt und die Notwendigkeit gleicher Rufnummern erhöht sich. Hinderlich ist dies auch, falls Teilnehmer einer TK-Anlage die gleiche Rufnummer für ihren Telefon- und Faxanschluss wünschen.

Die o.g. Punkte führen in der Regel dazu, dass nur ein minimaler Anteil der tatsächlich möglichen Rufnummern für die Adressierung von internen Endgeräten ausgenutzt werden kann.

Außerdem ist in der Regel ohne die Vernetzung von TK-Anlagen bei internen Gesprächen die Adressierung von anlageninternen Endgeräten über ihre öffentliche Rufnummer nicht möglich, bzw. eine feste Zuordnung des internen Rufnummernblocks zum öffentlichen Rufnummernblock ist vorgegeben (im allgemeinen entspricht die interne Rufnummer den letzten Ziffern der öffentlichen Rufnummer).

Eine Erweiterung des internen Rufnummernplans auf z.B. n = 16 Stellen bedeutet jedoch im allgemeinen, wenn jedem Endgerät eigene Leistungsmerkmalspeicher zugeordnet sind, einen erheblich höheren Speicherbedarf. Dieser resultiert aus der erheblich höheren Bitzahl der im Zusammenhang mit den Leistungsmerkmalen (z. B. Rufweiterleitung) jeweils einzeln zu speichernden Rufnummern. Die anderen Nachteile bleiben bestehen.

Die Speicherausstattung und die CPU begrenzen die maximal verwaltbare Anzahl von Endgeräten je System. Kann ein einzelnes System bis zu 100 000 Endgeräte verwalten, so bedeutet dies nicht, dass 5-stellige Rufnummern angemessen sind. Ggf. erfordert die Konfiguration (z.B. auch Vernetzung) einen Rufnummernplan mit mehr als 5 Stellen.

Der Erfindung liegt daher die Aufgabe zugrunde, eine verbesserte TK-Anlage anzugeben, bei der mit möglichst geringem Ressourcenaufwand (Aufwand an Prozessor- und Speicherkapazität) eine möglichst große Anzahl an Anschlüssen mit möglichst flexibler Rufnummernzuordnung verwaltet werden kann. In diesem Sinne soll auch eine möglichst weitgehende Ausnutzung des Rufnummern- bzw. Anschlusspotentials einer vorhandenen TK-Anlage ohne Änderung der grundlegenden Speicherstruktur bei einer Erhöhung der Mitarbeiterzahl des Betreibers möglich sein. Letztlich soll auch ein geeignetes Verfahren zum Betrieb einer solchen verbesserten TK-Anlage angegeben werden.

Diese Aufgabe wird in ihrem Vorrichtungsaspekt durch eine Telekommunikationsanlage mit den Merkmalen des Anspruchs 1 gelöst; ein zweckmäßiges Betriebsverfahren für eine solche ist in Anspruch 8 angegeben.

Ein wesentlicher Gedanke der Erfindung ist es, jedem adressierbaren Endgerät im System eine beliebige Rufnummer mit bis zu m Stellen (m > n möglich, z.B. m = 16) zuzuordnen, wobei die intern verwendeten Rufnummern weiterhin maximal n-stellig (z.B. n = 5) sind und die darauf basierende Vermittlungstechnik nicht geändert werden muss.

Hierzu wird im System eine Tabelle abgelegt, die eine Zuordnung der internen Rufnummern zu den beliebig vergebenen Rufnummern im Zusammenhang mit der dazugehörigen Anschluss-Adresse vorgibt, d.h. die Rufnummer des Endgerätes ist nicht mehr Index des Speichers, sondern die Zuordnung geschieht über die o.g. Tabelle.

Die beschriebene Zuordnungstabelle hebt den unmittelbaren Zusammenhang zwischen der Sicht des Anwenders (Rufnummer des eigenen Apparates, bzw. gewählte oder angezeigte Rufnummer eines fremden Apparates) und technischer Sicht (Rufnummer als Zugriffsadresse auf Speicherstrukturen, die einem Endgerät zugeordnet sind) auf. Sie ist als Transformationsschicht in bestehende Implementierungen integrierbar, ohne Änderungen in bestehende Strukturen zu erfordern, und ist somit für alle in einer Implementierung unterstützen Merkmale (Internverkehr, Externverkehr, Vernetzung, Anzeige von Rufnummern...) nutzbar. Während die TK-Anlage intern mit ihren vorhandenen starren Speicherstrukturen unverändert weiterarbeitet, werden aus Nutzer-Sicht die o.g. Beschränkungen aufgehoben.

Die beliebig vergebene Rufnummer kann sein:
- eine 1..n-stellige Nebenstellennummer (wie bisher, jedoch wird hier durch z.B. 1-stellige Nummern die Anzahl der intern adressierbaren Endgeräte nicht verringert),
- eine m-stellige Nebenstellennummer (m > n; z.B. m = 7),
- eine komplett öffentliche Rufnummer (z.B. 0211-123456),
- eine Kombination aus einer öffentlichen Anlagennummer und einer frei definierten Nebenstellennummer (z.B. 0211-5354-300 -> 0211: Vorwahl Düsseldorf, 5354: Anlagennummer einer bestimmten Firma, 300: frei definierte Nebenstellennummer),
- eine Kombination aus einer privaten Anlagennummer und einer frei definierten Nebenstellennummer (z.B. 9943-300 -> 9943: private Anlagennummer/Knotennummereiner bestimmten Firma, 300: frei definierte Nebenstellennummer).

Die Erfindung erbringt vor allem folgende wesentliche Vorteile:
- Sie bietet eine Erweiterung auf einen für alle Vermittlungsabläufe nutzbaren flexiblen Rufnummernplan, ohne den internen Rufnummernplan zu ändern;
- Der n-stellige Adressierungsraum der Anlage kann unabhängig von den vergebenen m-stelligen Rufnummern vollständig ausgeschöpft werden;
- Das Verfahren ist wohl für interne als auch für externe Verbindungen anwendbar (z.B. anlageninterne Verbindungen mit öffentlichen Rufnummern);
- Das Verfahren ist sowohl auf Absender- als auch auf Zielrufnummern anwendbar.
- Der interne Rufnummerplan und damit die Speicherkapazität können voll ausgeschöpft werden.
- Die Nebenstellennummern sind frei wählbar.
- Es können logische Einheiten (z.B. Firmen) an einer Anlage gebildet werden, wobei sogar Teilnehmer mit einer öffentlichen Rufnummer einer solchen logischen Einheit zugeordnet werden können.
- Alle Vermittlungsabläufe, die mit internen Rufnummern zur Verfügung stehen, sind weiterhin uneingeschränkt nutzbar.

Aus der obigen Erwähnung verschiedener möglicher Rufnummernstrukturen ergeben sich bereits Hinweise auf vorteilhafte Ausführungen der vorgeschlagenen TK-Anlage, die in Abhängigkeit von der konkreten Organisationsstruktur (unter besonderer Beachtung geografisch getrennter Firmensitze, Außenstellen, von Außendienstmitarbeitern etc.) des Betreibers implementiert werden. In der Regel wird mindestens ein Teil der unabhängig vom vermittlungstechnischen Rufnummernplan vergebenen ("frei wählbaren") Rufnummern bzw. Adressen als Nebenstellennummer ausgebildet sein.

Vielfach wird auch ein Teil der Adressen einen Anlagen-Rufnummernabschnitt aufweisen - insbesondere dann, wenn ehemals selbständige TK-Anlagen unter Beibehaltung der bekannten Rufnummern in eine Gesamtanlage integriert werden sollen. Größere Firmen mit zu verschiedenen Ortsvermittlungsstellen gehörigen Firmensitzen, Außenstellen, Büros oder Außendienstmitarbeitern werden eine Ausführung bevorzugen, bei der mindestens ein Teil der Adressen einen Ortsvorwahl-Abschnitt aufweist. Bei der schnell wachsenden Zahl von über die Grenzen eines Landes hinaus tätigen Firmen wird auch eine Implementierung zunehmend wichtiger, bei der zudem in einem Teil der vergebenen Anlagenrufnummern ein Ländercode-Abschhitt enthalten ist.

Besonders interessant ist die oben bereits angesprochene Möglichkeit, organisatorischen Untereinheiten (nachfolgend auch bezeichnet als "logische Einheiten") der Gesamtorganisation des Betreibers Ziffernabschnitte zuzuteilen, auf die die frei gewählten Nebenstellen- bzw. Durchwahlnummern derjenigen Mitarbeiter bzw. Arbeitsbereiche folgen, die der Untereinheit bzw. logischen Einheit zugehören. D. h. man kann verschiedenen logischen Einheiten die gleichen Durchwahlnummern zuordnen.

Bezüglich der kommenden und gehenden Rufnummernsignalisierung (aus Sicht der TK-Anlage) ergeben sich für den Anlagenbetrieb aus den genannten Möglichkeiten die folgenden wesentlichen Aspekte:

### A. Kommende Rufnummernsignalisierung (aus Sicht der TK-Anlage)

### Zielrufnummer

Verhalten sich die Endgeräte einer logischen Einheit wie Endgeräte einer Nebenstellenanlage, so wählen diese:
- zum Erreichen eines Endgerätes der gleichen logischen Einheit nur dessen Nebenstellennummer,
- zum Erreichen eines Endgerätes einer fremden logischen Einheit dessen öffentliche Rufnummer inklusive der Amtsausscheidungskennziffer,
- zum Erreichen eines Endgerätes im öffentlichen Netz dessen öffentliche Rufnummer inklusive der Amtsausscheidungskennziffer.

Verhält sich ein Endgerät wie ein Endgerät im öffentlichen Netz (öffentlicher Netzanbieter), so wählt dieses:
- zum Erreichen eines Endgerätes der gleichen logischen Einheit dessen öffentliche Rufnummer ohne die Amtsausscheidungskennziffer,
- zum Erreichen eines Endgerätes einer fremden logischen Einheit dessen öffentliche Rufnummer ohne die Amtsausscheidungskennziffer,
- zum Erreichen eines Endgerätes im öffentlichen Netz dessen öffentliche Rufnummer ohne die Amtsausscheidungskennziffer.

Somit kann die Vermittlungssoftware erkennen, ob eine gewählte Rufnummer immer oder nur bei Wahl einer Amtsausscheidungskennziffer als öffentliche Rufnummer zu bewerten ist.

Ist eine Rufnummer als öffentliches Ziel erkannt worden, so ist in der Tabelle nachzuschauen, ob diese Rufnummer vorhanden ist (Kombination aus Ländercode-Städtecode-Anlagennummer-Nebenstellennummer). Falls ja, so wird diese Nummer auf die zugehörige interne Nummer mit der dazugehörigen Anschlussadresse umgesetzt und damit ein direkter Aufbau zum Endgerät durchgeführt. Wird nur eine Nebenstellennummer gewählt (diese könnte ja mehrfach vergeben worden sein), so wird in der Tabelle der erste Eintrag mit dieser Nebenstellennummer gesucht, der zur gleichen logischen Einheit gehört wie der Absender. Die in diesem Eintrag enthaltene interne Nummer wird für die weiteren Vermittlungsabläufe verwendet.

### Absenderrufnummer

Über die Anschlussadresse des rufenden Endgerätes kann dessen Absenderadresse aus der o.g. Tabelle ermittelt werden. Hierbei wird für die internen Vermittlungsabläufe die interne Nummer als Absenderadresse verwendet, und dann bei gehendem Verkehr wieder umgesetzt (siehe nächstes Kapitel).

### B. Gehende Rufnummernsignalisierung (aus Sicht der TK-Anlage)

Zielrufnummer

In der Regel wird zum Endgerät keine Zielrufnummer übertragen. Falls es sich jedoch um einen MSN-Bus handelt, so ist die Nebenstellennummer des Zieles im Setup mitzuschicken.

### Absenderrufnummer

Aus folgender Tabelle geht hervor, ob als Absenderadresse nur die Nebenstellennummer oder die komplette öffentliche Nummer zum Ziel-Endgerät geschickt wird:

| Logische Einheit von Absender und Ziel gleich | 'Amt mit Kennziffer' für Ziel in Tabelle gesetzt | Absenderadresse |
|---|---|---|
| ja | ja | Nebenstellennummer |
| ja | nein | öffentliche Nummer |
| nein | ja | öffentliche Nummer |
| nein | nein | öffentliche Nummer |

Vorteile und Zweckmäßigkeiten der Erfindung ergeben sich im übrigen aus den Unteransprüchen sowie der nachfolgenden Beschreibung eines konkreten Ausführungsbeispiels anhand der Figuren. Von diesen zeigen:

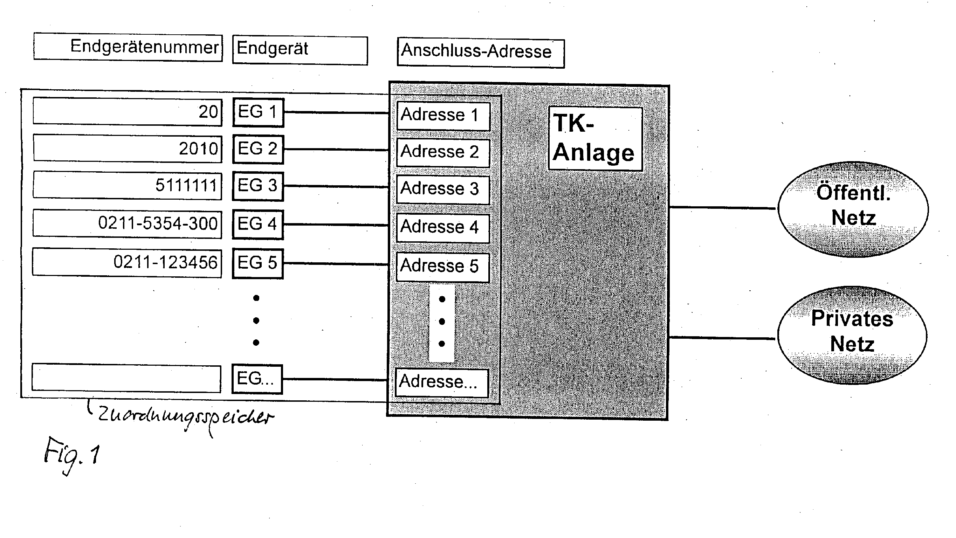

- Fig. 1: eine schematische Darstellung einer TK-Anlage mit einer Mehrzahl angeschlossener Endgeräte gemäß einer Ausführungsform der Erfindung und
- Fig. 2: eine entsprechende Zuordnungstabelle, wie sie in einem programmierbaren Speicher der TK-Anlage nach Fig. 1 gespeichert wäre.

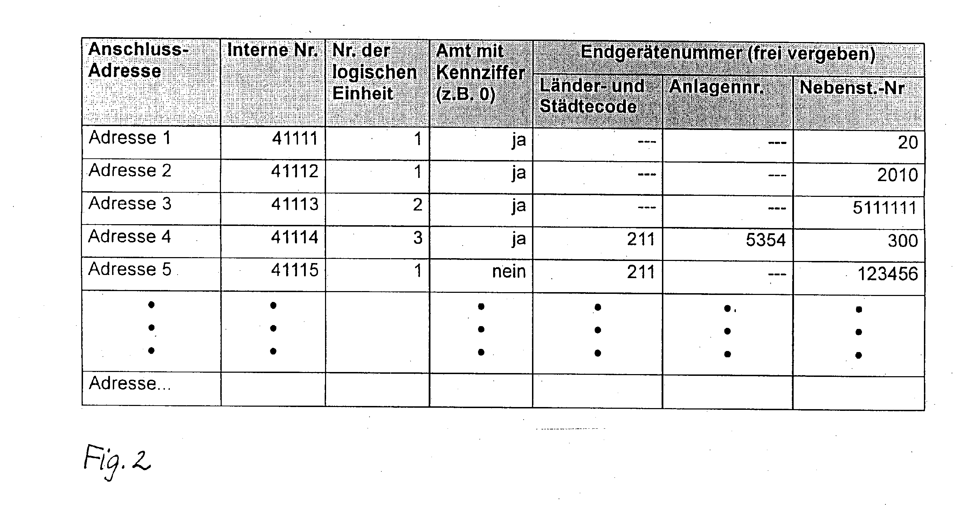

Beide Figuren sind im Lichte der obigen allgemeinen Ausführungen aufgrund ihrer Beschriftung im wesentlichen selbsterklärend, so dass hier auf eine verbale Erläuterung weitgehend verzichtet werden kann. Zu beachten ist, dass die in der zweiten Spalte der Tabelle in Fig. 2 angegebene interne Nummer die vermittlungstechnisch tatsächlich relevante anlageninterne Rufnummer der Anschlüsse bzw. Endgeräte 1 bis 5 ist und alle Vermittlungsabläufe denen einer Anlage mit einem entsprechenden Rufnummernplan entsprechen. Es entfällt jedoch die eingangs geschilderte Reduzierung der Anzahl der tatsächlich verfügbaren Anschlüsse durch die Belegung bestimmter Rufnummernblöcke mit speziellen Funktionen oder durch Vergabe von internen Rufnummern mit einer geringeren als der maximal möglichen Stellenzahl.

Die Endgerätenummer besteht aus einer frei vergebenen Nebenstellennummer, die von Teilnehmern der gleichen logischen Einheit (z.B. Firma) gewählt wird, sowie ggf. einer öffentlichen Einwahlnummer, die sich aus dem Länder- und Städtecode und der Anlagennummer zusammensetzt, und von Teilnehmern einer fremden logischen Einheit gewählt wird, als ob diese im Amtsnetz sitzen würden.

Im Lichte der obigen allgemeinen Erläuterungen versteht es sich, dass die Ausführung der Erfindung nicht auf das in den Figuren dargestellte Beispiel oder auch nur auf ähnliche Rufnummernkonfigurationen beschränkt ist, sondern ebenso in einer Vielzahl von Abwandlungen möglich ist, die im Rahmen fachgemäßen Handelns liegen.

## Patentansprüche

1. Telekommunikationsanlage mit einer Mehrzahl von Endgeräten, denen jeweils eine maximal n-stellige interne Rufnummer zugeordnet ist, und einem Rufnummernpeicher mit 10ⁿ Speicherplätzen
**gekennzeichnet durch**
einen dem Rufnummernspeicher vorgeschalteten programmierbaren Zuordnungstabellen-Speicher zur Speicherung einer Zuordnungstabelle, die jedem Endgeräteanschluss eine unabhängig von der internen Rufnummer wählbare, aus maximal m Ziffern bestehende Adresse zuweist.

2. Telekommunikationsanlage nach Anspruch 1,
**dadurch gekennzeichnet, dass** m > n ist.

3. Telekommunikationsanlage nach Anspruch 1,
**dadurch gekennzeichnet, dass**
mehrere Zuordnungstabellen-Speicher vorgesehen sind, von denen für mindestens einen gilt: m ≤ n.

4. Telekommunikationsanlage nach Anspruch 1 oder 2,
**dadurch gekennzeichnet, dass** mindestens ein Teil der m-stelligen Adresse eine Nebenstellennummer ist.

5. Telekommunikationsanlage nach einem der vorangehenden Ansprüche,
**dadurch gekennzeichnet, dass** mindestens ein Teil der Adressen einen Ortsvorwahl-Abschnitt gemäß ISDN Numbering Plan bzw. einen Level1-Abschnitt gemäß Private Numbering Plan aufweist.

6. Telekommunikationsanlage nach Anspruch 5,
**dadurch gekennzeichnet, dass** mindestens ein Teil der Adressen mit Ortsvorwahl-Abschnitt bzw. Levell-Abschnitt einen Ländercode-Abschnitt bzw. Level2-Abschnitt aufweist.

7. Telekommunikationsanlage nach einem der vorangehenden Ansprüche,
**dadurch gekennzeichnet, dass** mindestens ein Teil der Adressen einen Anlagen-Rufnummernabschnitt bzw. Level0-Abschnitt aufweist.

8. Telekommunikationsanlage nach einem der vorangehenden Ansprüche,
**dadurch gekennzeichnet, dass** mindestens ein Teil der Adressen einen Untereinheiten-Ziffernabschnitt aufweist, der eine Zuordnung des entsprechenden Endgeräteanschlusses zu einer definierten Untermenge aller Endgeräteanschlüsse kennzeichnet.

9. Telekommunikationsanlage nach einem der vorangehenden Ansprüche,
**dadurch gekennzeichnet, dass** im wesentlichen 10ⁿ Endgeräteanschlüsse vorgesehen sind.

10. Verfahren zum Betrieb einer Telekommunikationsanlage nach einem der vorangehenden Ansprüche,
**dadurch gekennzeichnet, dass**
von Endgeräteanschlüssen einer einzigen Untermenge, die sich wie Endgeräte einer Nebenstellenanlage verhalten, zum Erreichen eines Endgeräteanschlusses der gleichen Untermenge nur eine Nebenstellennummer, hingegen zum Erreichen eines Endgeräteanschlusses einer anderen Untermenge oder eines Endgeräteanschlusses im öffentlichen Netz dessen öffentliche Rufnummer, inklusive der Amtsausscheidungskennziffer, zu wählen ist.

11. Verfahren nach Anspruch 10,
**dadurch gekennzeichnet, dass**
von einem Endgerät aus, welches sich wie ein Endgerät im öffentlichen Netz verhält, zum Erreichen eines beliebigen anderen Endgeräteanschlusses an der Telekommunikationsanlage dessen öffentliche Rufnummer, ohne Amtsausscheidungskennziffer, zu wählen ist.

12. Verfahren nach Anspruch 10 oder 11,
**dadurch gekennzeichnet, dass**
für interne Vermittlungsabläufe die interne Rufnummer als Absenderadresse verwendet und bei gehendem Verkehr unter Anwendung der Zuordnungstabelle umgesetzt wird.

13. Verfahren nach einem der Ansprüche 10 bis 12,
**dadurch gekennzeichnet, dass**
bei Nutzung eines MSN-Busses die Nebenstellennummer des Ziel-Endgeräteanschlusses im SETUP signalisiert wird.
